Europäisches Patentamt

European Patent Office

Office européen des brevets

(19)

(11) Veröffentlichungsnummer: **0 009 574**

**A1**

(12) ## EUROPÄISCHE PATENTANMELDUNG

(21) Anmeldenummer: 79102886.3

(22) Anmeldetag: 09.08.79

(51) Int. Cl.³: **H 01 J 23/26**

(30) Priorität: 19.09.78 DE 2840782

(43) Veröffentlichungstag der Anmeldung:
16.04.80 Patentblatt 80/8

(84) Benannte Vertragsstaaten:
FR GB IT

(71) Anmelder: SIEMENS AKTIENGESELLSCHAFT Berlin
und München
Postfach 22 02 61
D-8000 München 22(DE)

(72) Erfinder: Heynisch, Hinrich Dr. rer.nat., Dipl-Phys.
Im Birket 7
D-8032 Gräfelfing(DE)

(72) Erfinder: Hübner, Erwin Dr. rer.nat., Dipl.-Phys.
Geitnerweg 24
D-8000 München 82(DE)

(72) Erfinder: Barth, Heinz
Schlierseestrasse 55
D-8000 München 90(DE)

(54) **Wanderfeldröhre mit einer wendelförmigen Verzögerungsleitung und Verfahren zum Herstellen der Wanderfeldröhre.**

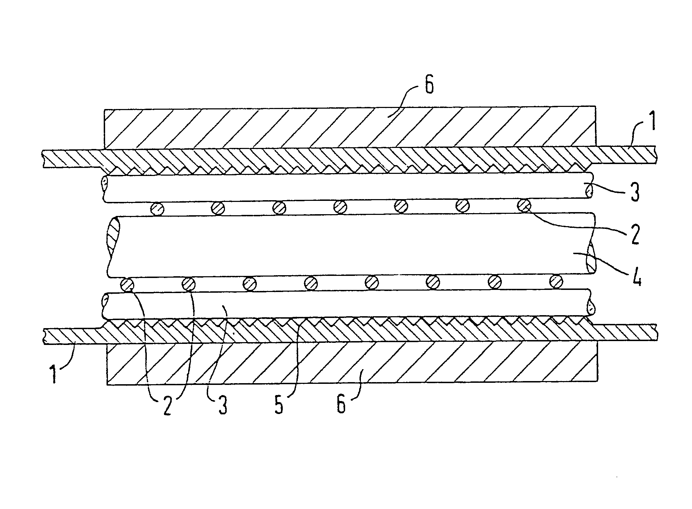

(57) Die Erfindung bezieht sich auf eine Wanderfeldröhre mit einer innerhalb einer massiven metallischen Vakuumhülle (1) untergebrachten wendelförmigen Verzögerungsleitung (2) und einer Anzahl parallel zueinander längs Mantellinien der Leitung angeordneten dielektrischen Haltestäben (3). Bei dieser Wanderfeldröhre sollen der Wärmewiderstand und die HF-Verluste der Wendelleitung minimiert werden. Die Erfindung sieht hierzu vor, daß die Vakuumhülle (1) und die Verzögerungsleitung (2) aus Kupfer bestehen und durch Festkörper-Reaktionen zwischen Kupfer und/oder Kupferoxid unter Mischkristallbildung mit den Haltestäben (3) verbunden sind. Eine erfindungsgemäße Röhre wird bei Wanderfeldröhren (Wendeltyp) aller Leistungsklassen verwendet (Fig. 1).

SIEMENS AKTIENGESELLSCHAFT          Unser Zeichen
Berlin und München                 VPA 78 P 1 1 7 1 EUR

Wanderfeldröhre mit einer wendelförmigen
Verzögerungsleitung

Die Erfindung betrifft eine Wanderfeldröhre mit einer innerhalb einer massiven metallischen Vakuumhülle der Röhre untergebrachten wendelförmigen Verzögerungsleitung und einer Anzahl parallel zueinander längs Mantellinien der Leitung angeordneten dielektrischen Haltestäben, die einen guten thermischen Kontakt zur Vakuumhülle aufweisen.

Wanderfeldröhren mit einer innerhalb einer massiven metallischen Vakuumhülle der Röhre untergebrachten wendelförmigen Verzögerungsleitung und einer Anzahl parallel zueinander längs Mantellinien der Leitung angeordneten dielektrischen Haltestäben, die durch eine unrunde Formgebung des Innenquerschnitts der Vakuumhülle in ihrer seitlichen Lage fixiert sind und einen guten thermischen Kontakt zur Vakuumhülle aufweisen, sind bekannt (DE-PS 1 937 704). Bei derartigen Wanderfeldröhren soll neben einer guten Wärmeableitung von der Wendel zur Vakuumhülle stets eine feste und elastische Halterung des Wendelsystems gewährleistet sein. Das Problem wurde bisher durch verschiedene Klemmtechniken, Prägetechnik oder Schrumpftechnik gelöst. Hierzu mußten die meisten Bauteile der Wanderfeldröhre, insbesondere die Verzögerungsleitung und die Vakuumhülle, aus federnden Metallen mit nicht sehr guter Wärmeleitung und elektrischer Leitfähigkeit hergestellt werden.

Es ist auch an sich bekannt, die Vakuumhülle und die Verzögerungsleitung aus Kupfer herzustellen und diese Teile mit Haltestäben aus dielektrischem Material zu verlöten.

Der Erfindung liegt die Aufgabe zugrunde, den Wärmewiderstand und die HF-Verluste einer Wanderfeldröhre mit einer Wendelverzögerungsleitung zu minimieren. Zur Lösung dieser Aufgabe ist bei einer Wanderfeldröhre der eingangs genannten Art gemäß der Erfindung vorgesehen, daß die Vakuumhülle und die Verzögerungsleitung aus Kupfer bestehen und durch Festkörper-Reaktionen zwischen Kupfer und/oder Kupferoxid unter Mischkristallbildung mit den Haltestäben verbunden sind. Die Haltestäbe bestehen dabei vorzugsweise aus Berylliumoxid oder Aluminiumoxid.

Die Erfindung hat den wesentlichen Vorteil, daß durch die Verwendung von (duktilem) Kupfer sowohl für die Wendel als auch für die Vakuumhülle und von vorzugsweise aus Berylliumoxid bestehenden Haltestäben die bestmögliche Wärmeableitung bei gleichzeitig niedrigsten HF-Verlusten erzielt und hierdurch ein maximaler
elektronischer Wirkungsgrad erreicht wird.

Durch das Verbinden der Kupferteile und Berylliumoxidteile durch Festkörper-Reaktionen zwischen Kupfer und
Kupferoxid über Mischkristallbildung bzw. Kupferoxid
und Berylliumoxid ebenfalls durch Mischkristallbildung
erhält man den kleinstmöglichen Gesamtwärmewiderstand,
da auch Berylliumoxid für sich sehr gut wärmeleitend
ist. Dadurch, daß Wendel und Vakuumhülle aus Kupfer
hergestellt sind, erhält man neben der sehr guten Wärmeleitfähigkeit des Kupfers gleichzeitig eine sehr gute
elektrische Leitfähigkeit der wendelförmigen Verzögerungsleitung, d.h. kleinstmögliche HF-Verluste, und somit weniger Verlustwärmeleistung und damit gleichzeitig
einen bestmöglichen elektronischen Wirkungsgrad (große
Bandbreite) einer Wanderfeldröhre mit einer wendelförmigen Verzögerungsleitung.

Der besondere Vorteil der erfindungsgemäßen Wanderfeldröhre besteht darin, daß das Wendel-Verzögerungsleitungs-System in einem einzigen Arbeitsgang herstellbar
ist, ohne irgendwelche thermische, chemische oder sonstige Vorbehandlungen (mit Ausnahme der Reinigung) der
einzelnen Bauteile, wie Wendel, Vakuumhülle oder Isolier - z.B. Beryllium - Haltestäbe.

An Hand der Figur der Zeichnung soll die Erfindung nachstehend mit weiteren Merkmalen näher erläutert werden.
erfindungsunwesentliche Teile der Wanderfeldröhre sind
weggelassen.

-4-    VPA    78 P 1171 EUR

Die in der Figur schematisch dargestellte Wanderfeldröhre weist eine innerhalb einer massiven, aus Kupfer bestehenden Vakuumhülle 1 angeordnete aus Kupfer bestehende wendelförmige Verzögerungsleitung 2 auf. Die fertig gewickelte wendelförmige Verzögerungsleitung 2, die in diesem Ausführungsbeispiel aus Kupferdraht besteht, die aber beispielsweise auch aus Kupferband bestehen kann, befindet sich beim Herstellungsverfahren auf einem Innendorn 4. Der Innendorn 4 ist ein geschliffener und polierter Dorn aus einem Material mit einem größeren Ausdehnungskoeffizienten als Kupfer, beispielsweise aus V2a-Stahl. Die Haltestäbe 3 bestehen vorzugsweise aus Berylliumoxid. Es sind mindestens zwei, zweckmäßig drei Haltestäbe 3 vorgesehen. Die Haltestäbe 3 sind gereinigt und können mit einer nicht dargestellten Dämpfungsschicht, z.B. einer Kohleschicht, versehen sein. Die Vakuumhülle (Außenmantel) 1 liegt als Kupferrohr der gewünschten Abmessungen vor. Die Innenfläche des Rohres kann zweckmäßigerweise feinste, gewindeartige oder ringförmige Vertiefungen 5 aufweisen, um axiale thermische Ausdehnungsunterschiede zu den Haltestäben 3 nach dem Verbinden abfangen zu können. Die Vakuumhülle 1 kann z.B. ein Fließpreßteil sein. Zum Verbinden sind alle Teile in der üblichen Weise der Herstellung eines Wendelsystems ineinandergeschoben, wie das aus der Figur ersichtlich ist. Außen um die Vakuumhülle 1 ist beim Verbinden noch ein eng passendes, sehr stabiles Zylinderrohr 6, z.B. aus Molybdän, mit geringerem Ausdehnungskoeffizienten als Kupfer geschoben, um beim Hochheizen des Aufbaues auch einen gewissen nach innen gerichteten Druck zu erzeugen, damit alle Teile zu gegenseitiger, guter Lage kommen, wenn das System auf eine Temperatur zwischen 400 °C und 700 °C gebracht wird.
Der Druck von innen her wird durch den Innendorn 4
innerhalb der Wendel 2 erzeugt.

Der gesamte Systemaufbau wird nunmehr bei ca. 150 °C an
normaler trockener Luft getempert, und zwar für eine
Dauer von ca. 90 Minuten. Hierbei bilden sich auf den
Kupferoberflächen Kupferoxide (CuO, $CuO_2$).

Nach diesem Vorgang wird die Umgebungsatmosphäre auf
trockenen Stickstoff gewechselt und das System auf eine
Temperatur von ca. 600 °C hochgefahren und ca. 10 Minuten auf dieser Temperatur belassen. Hierbei bilden sich
jetzt durch Festkörper-Reaktionen unter Mischkristallbildung die fest haftenden Verbindungen zwischen den
Berührungsstellen zwischen Kupfer (Vakuumhülle 1 und
Wendelwindungen der Verzögerungsleitung 2) und den vorzugsweise aus Berylliumoxid-Keramik bestehenden Haltestäben 3.

Anschließend wird die Atmosphäre gewechselt auf Spaltgas (oder $H_2$), um die Kupferoberflächen auf reines
Kupfer zu reduzieren. Hierzu wird bei gleichbleibender
Temperatur von ca. 600 °C für 15 Minuten mit Spaltgas
(oder $H_2$) gespült und anschließend abgekühlt. Bei einer
Temperatur von weniger als 50 °C kann das fertig verbundene Wendelsystem entnommen werden.

3 Patentansprüche,
1 Figur.

Patentansprüche

1. Wanderfeldröhre mit einer innerhalb einer massiven metallischen Vakuumhülle der Röhre untergebrachten wendelförmigen Verzögerungsleitung und einer Anzahl parallel zueinander längs Mantellinien der Leitung angeordneten dielektrischen Haltestäben, die einen guten thermischen Kontakt zur Vakuumhülle aufweisen, d a d u r c h  g e k e n n z e i c h n e t , daß die Vakuumhülle (1) und die Verzögerungsleitung (2) aus Kupfer bestehen und durch Festkörper-Reaktionen zwischen Kupfer und/oder Kupferoxid unter Mischkristallbildung mit den Haltestäben (3) verbunden sind.

2. Wanderfeldröhre nach Anspruch 1, d a d u r c h  g e k e n n z e i c h n e t , daß die Haltestäbe (3) aus Berylliumoxid oder Aluminiumoxid bestehen.

3. Verfahren zum Herstellen einer Wanderfeldröhre nach Anspruch 1 oder 2, d a d u r c h  g e k e n n z e i c h n e t , daß die Verzögerungsleitung (2) auf einen Innendorn (4) aus einem Material mit einem größeren Ausdehnungskoeffizienten als Kupfer geschoben und mit diesem sowie den gereinigten Haltestäben (3) in die Vakuumhülle (1) und diese in ein massives Zylinderrohr (6) aus einem Material mit geringerem Ausdehnungskoeffizienten als Kupfer eingefügt wird, daß das System auf eine Temperatur zwischen 400 °C und 700 °C gebracht und anschließend bei ca. 150 °C in trockener Luft ca. 90 Minuten getempert wird, daß dann die Atmosphäre auf trockenen Stickstoff gewechselt und für ca. 10 Minuten auf 600 °C erhitzt wird, daß danach die Atmosphäre auf

Spaltgas oder $H_2$ gewechselt wird, um die Kupferoberflächen in ca. 15 Minuten bei einer Temperatur von
600 $^{\circ}$C auf reines Kupfer zu reduzieren, und daß das
System anschließend abgekühlt wird.

Europäisches
Patentamt   **EUROPÄISCHER RECHERCHENBERICHT**   Nummer der Anmeldung

0009574

EP 79 10 2886

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | INTERNATIONAL ELECTRON DEVICES MEETING, Technical Digest 1977, 5. - 7. Dezember 1977, Seiten 116 - 119 New York, U.S.A. G. FLEURY et al.: "High-Power Brazed-Helix Telecommunications TWT's" <br><br> * Seite 116, rechte Spalte, zweite Hälfte; Abbildung 1(b) * <br><br>-- | 1,2 | H 01 J 23/26 |
| | GB - A - 984 607 (FERRANTI) <br> * Insgesamt * <br><br>-- | 1-3 | **RECHERCHIERTE SACHGEBIETE (Int. Cl. 3)** <br><br> H 01 J 23/26 |
| | US - A - 3 208 126 (W.D. MIMS) <br> * Das ganze Dokument * <br><br>-- | 1-3 | |
| | US - A - 3 670 196 (B.H. SMITH) <br> * Spalte 4, Zeile 43 - Spalte 5, Zeile 48; Abbildungen 6 - 8b * <br><br>-- | 1-3 | |
| A | DE - A - 2 556 279 (BROWN, BOVERI) <br> * Seite 3, zweite Hälfte; Seite 5, Zeilen 29,30 * <br><br>-- | 1-3 | **KATEGORIE DER GENANNTEN DOKUMENTE** |
| A | DE - A - 2 055 657 (SIEMENS) <br> * Seite 6, zweite Hälfte - Seite 7, erste Hälfte; Seite 8, letzte Zeile - Seite 9, erste Hälfte; Seite 11, erste Hälfte * <br><br>-- ./. | 1-3 | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 12-12-1979 | LAUGEL |

EPA form 1503.1   06.78

**Europäisches Patentamt**

# EUROPÄISCHER RECHERCHENBERICHT

EP 79 10 2886

-2-

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | <u>FR - A - 2 263 210</u> (GENERAL ELEC-TRIC)<br>* Seite 1, Zeilen 17-27; Seite 2, Zeilen 9-15 *<br><br>---- | 1-3 | |
| | | | **RECHERCHIERTE SACHGEBIETE (Int. Cl. 3)** |